# EUROPÄISCHE PATENTSCHRIFT

(11) **EP 4 073 442 B1**
(45) Veröffentlichungstag und Bekanntmachung des Hinweises auf die Patenterteilung: **18.03.2026**
(21) Anmeldenummer: 20820139.2
(22) Anmeldetag: 04.12.2020
(51) Int. Cl.: F25D 17/04, A47B 77/16, A47B 88/919, A23B 7/148, A23B 2/708

(54) **SCHUBLADENDECKEL**
DRAWER LID
COUVERCLE DE TIROIR

(30) Priorität: 09.12.2019 CH 15672019
(43) Veröffentlichungstag der Anmeldung: 19.10.2022
(73) Patentinhaber: Julius Blum GmbH, 6973 Höchst (AT)
(72) Erfinder: BERTSCHI, Daniel, 6284 Gelfingen (CH)
(74) Vertreter: Torggler & Hofmann Patentanwälte - Innsbruck
(86) Internationale Anmeldenummer: PCT/EP2020/084738
(87) Internationale Veröffentlichungsnummer: WO 2021/115975

(56) Entgegenhaltungen:
- EP-A1- 2 861 921
- WO-A1-2019/141574

## Beschreibung

### Technisches Gebiet

Die vorliegende Erfindung beschreibt einen Deckel zur Auflage auf einer Schublade einer Vakuumschubladeneinrichtung mit Hubmitteln, wobei der Deckel eine Abdichtung eines Schubladeninnenraums zur Schublade durch geeignete Mittel im Deckel ermöglicht, wobei der Deckel und die Hubmittel mit einer Steuerung wirkverbunden sind.

### Stand der Technik

Kühlschränke zur Lagerung von Lebensmitteln haben einige Nachteile, da ständig viel elektrische Energie benötigt wird, um einen Innenraum andauernd massiv zu kühlen. Wenig Beachtung fand bisher das Innenklima des Kühlschrankes. Gemäss einer Untersuchung des Hygiene Council, welches eine internationale Studie namens Hygiene Report 2010 durchgeführt hat, ist der Kühlschrank mit rund 11400000 Keimen pro Quadratzentimeter auch mehr belastet, als eine Toilette mit rund 100 Erreger pro Quadratzentimeter. Diese Meldung 2010 fand ein grosses Medienecho, doch ausser Empfehlungen, den Kühlschrank öfter zu reinigen, fanden bis jetzt keine wahrnehmbaren Verbesserungen statt.

Erstmals wurde in der DE202017006169 allgemein eine Vakuumschubladeneinrichtung mit einer Schublade und einem Deckel offenbart, wobei mittels einer Pumpe ein Unterdruck in einem Schubladeninnenraum erzeugt werden konnte. Die Vakuumschubladeneinrichtung umfasst eine Schublade mit Wänden und einen Schubladeninnenraum, wobei die Schublade mit einem Deckel wirkverbindbar ist und innerhalb eines Schubladenkorpus linear bewegbar gelagert ist. Genauere Details über die Schublade, den Deckel, möglicherweise Hubmittel und Evakuiermittel sind in der DE202017006169 aber weitgehend offengelassen.

Der nächstliegende Stand der Technik ist die WO2019/141574 des Anmelders. Nicht zwingend zu kühlende Lebensmittel können in einer Vakuumschubladeneinrichtung bei Raumtemperatur gelagert werden, wobei auf einen erhöhten Energieverbrauch zur Kühlung verzichtet wird.

Der Schubladeninnenraum wird auf einen leichten Unterdruck, unterhalb des Atmosphärendrucks evakuiert werden, welcher kontrolliert erzeugt und gehalten wird. Lebensmittel können so auf vereinfachte Weise länger verzehrbar oder geniessbar gehalten werden. Die Lagerung im Schubladenkorpus mit Vakuumschubladeneinrichtung benötigt weniger Energie als der Kühlschrank, da die Sauerstoffreduktion im Innenraum nach wenigen Minuten abgeschlossen ist und danach nahezu keine weitere Elektrizität benötigt wird. Eine Vakuumschubladeneinrichtung lässt sich umsetzen ohne schädliche Materialien wie Kältemittel oder Wärmedämmung. Der Verbrauch von Kunststoffbeuteln bei der bekannten Vakuumierung mittels Vakuumiergeräten kann signifikant reduziert werden und doch können Lebensmittel über längere Zeiträume problemlos gelagert werden. Mittels Vakuumschubladeneinrichtungen können Lebensmittel einfacher, umweltfreundlicher und energieeffizienter gelagert werden. Dies wirkt sich positiv auf die Qualität der Lebensmittel und die Gesundheit der Verbraucher aus. Es würden auch weniger Lebensmittel weggeworfen und das oft kritisierte "food waste", also die Lebensmittelverschwendung eingeschränkt, da die Qualität der Lebensmittel länger erhalten werden kann.

Der Schubladenkorpus bildet die äussere Hülle, in welcher der Deckel und die Schublade bewegbar geschützt gelagert sind. Es sind elektrisch über eine Steuerung betreibbare Hubmittel und Evakuiermittel im Deckel oder der Schublade angeordnet, sodass das Evakuieren bei Auflage des Deckels auf der Schublade gesteuert ermöglicht ist. Durch einen Luftkanal ist Luft aus dem Schubladeninnenraum abpumpbar. Bei Anordnung von Sensoren kann die Evakuierung automatisiert ablaufen und auch die Belüftung vor der Öffnung der Schublade kann erkannt und automatisch durch die Steuerung eingeleitet werden.

In der WO2019/141574 ist ein möglichst kompakter Deckel mehrlagig ausgestaltet vorgesehen, welcher einfach auch auf bestehende Schubladen montierbar ist. Um die Bauhöhe des Deckels klein zu halten, sind die Hubmittel und Evakuiermittel möglichst in den Deckel integriert.

WO2019/141574 offenbart einen Deckel zur Auflage auf einer Schublade einer Vakuumschubladeneinrichtung mit Hubmitteln, wobei der Deckel eine Abdichtung eines Schubladeninnenraums zur Schublade durch geeignete Mittel im Deckel ermöglicht, wobei der Deckel und die Hubmittel mit einer Steuerung wirkverbunden sind, wobei Entfeuchtungsmittel angeordnet sind, sodass in zeitlichen Abständen Frischluft von außerhalb des Deckels und des Schubladeninnenraums zuführbar, umwälzbar ist, wobei die Entfeuchtungsmittel mindestens einen Feuchtigkeitssensor aufweisen, welcher mit der Steuerung wirkverbunden ist und die gesteuerte Messung und Überwachung der relativen Luftfeuchtigkeit im Schubladeninnenraum erlaubt, wobei der Deckel mit der Steuerung, elektrischen Evakuiermitteln und/oder den Entfeuchtungsmitteln wirkverbunden ist, welche automatisiert durch die Steuerung betrieben werden, wobei neben den Evakuiermitteln verschiedene Kanäle und Sensoren innerhalb des Deckels in mehreren Aussparungen angeordnet sind.

In der Praxis hat sich nun gezeigt, dass Lebensmittel, die in derartigen Vakuumschubladeneinrichtung gelagert werden, aufgrund des Unterdrucks bzw. leichten Vakuums teilweise stark ausgasen. Aufgrund der jedem Lebensmittel zuordbaren Wasseraktivitäten, diffundiert unterschiedlich viel Feuchtigkeit/Wasser aus dem Lebensmittel zur Oberfläche der Lebensmittel und tritt in Form von Flüssigkeit bzw. Wasserdampft zur Oberfläche bzw. tritt aus dieser aus. Nach wenigen Stunden bildet sich ein Flüssigkeitsfilm auf den Lebensmitteloberflächen auch, wenn der Schubladeninnenraum bzw. der Behälterinnenraum mit den Evakuiermitteln zwischenzeitlich abgepumpt wird. An diesen feuchten Lebensmitteloberflächen bilden sich relativ schnell Pilze oder die Oberflächen laufen unschön an, sodass die dauerhafte Lagerung in einer solchen Vakuumschubladeneinrichtung beispielsweise von Brot oder offenen gelagerten Getreideschüttgut eher schneller verdirbt, als bei Lagerung in einem offenen Brotkasten. Der Wunsch des Benutzers ist aber, möglichst ohne Vorsortierung der Lebensmittel, alle Lebensmittel, die nicht gekühlt zu lagern sind, in einer solchen Vakuumschubladeneinrichtung zu lagern.

### Darstellung der Erfindung

Die vorliegende Erfindung hat sich zur Aufgabe gestellt einen Deckel einer Vakuumschubladeneinrichtung, eine Vakuumschubladeneinrichtung, umfassend eine Schublade, Hubmittel, Evakuiermittel und einen solchen Deckel zu schaffen, wobei das Anlaufen von Lebensmitteloberflächen weitgehend verhindert und eine Pilzbildung auf den Lebensmitteloberflächen automatisiert unterbunden wird.

Diese Aufgabe wird mit einem Deckel gemäss Anspruch 1 und einer Vakuumschubladeneinrichtung gemäss Anspruch 8 gelöst.

Neben Entfeuchtungsmitteln, die innerhalb des Deckels angeordnet sind, ist optional eine Beleuchtung des Schubladeninnenraums bzw. des Behälterinnenraums mit blauem sichtbaren Licht vorgesehen, damit neben der Verhinderung einer Feuchtigkeitsschicht auf den Lebensmitteln zusätzlich die Schimmelpilzbildung durch Strahlung unterbunden wird.

Mit Evakuierung wird hier ein leichter Unterdruck unterhalb des Atmosphärendrucks von 150mbar und mehr, also absolute Drücke von weniger als 850mbar verstanden, welcher im Schubladeninnenraum bzw. Innenraum von Behältern in der Schublade ausbildbar ist.

### Kurze Beschreibung der Zeichnungen

Bevorzugte Ausführungsbeispiele des Erfindungsgegenstandes werden nachstehend im Zusammenhang mit den anliegenden Zeichnungen beschrieben.
- Figur 1: zeigt eine perspektivische Ansicht einer Vakuumschubladeneinrichtung in einem Schubladenkorpus bei geöffneter Schublade, während
- Figur 2: einen schematischen Teilschnitt durch eine Vakuumschubladeneinrichtung der Figur 1 in einem Schubladenkorpus bei geschlossener Schublade bzw. Vakuumschubladeneinrichtung zeigt.
- Figur 3: zeigt eine Aufsicht auf einen Deckel, bei Anordnung auf der Schublade, wobei die integrierten Bauteile, Aussparungen und Kanäle gezeigt sind.
- Figur 4: zeigt eine perspektivische Ansicht eines steuerbaren Ventils von der dem Schubladenkorpus zugewandten Seite des Deckels bei gestrichelt angedeutetem Deckel.
- Figur 5: zeigt eine Aufsicht auf die Unterseite des Deckels, welche dem Schubladenkorpus zugewandt ist mit komplettierten Dichtungsmitteln und Beleuchtungsmitteln.

### Beschreibung

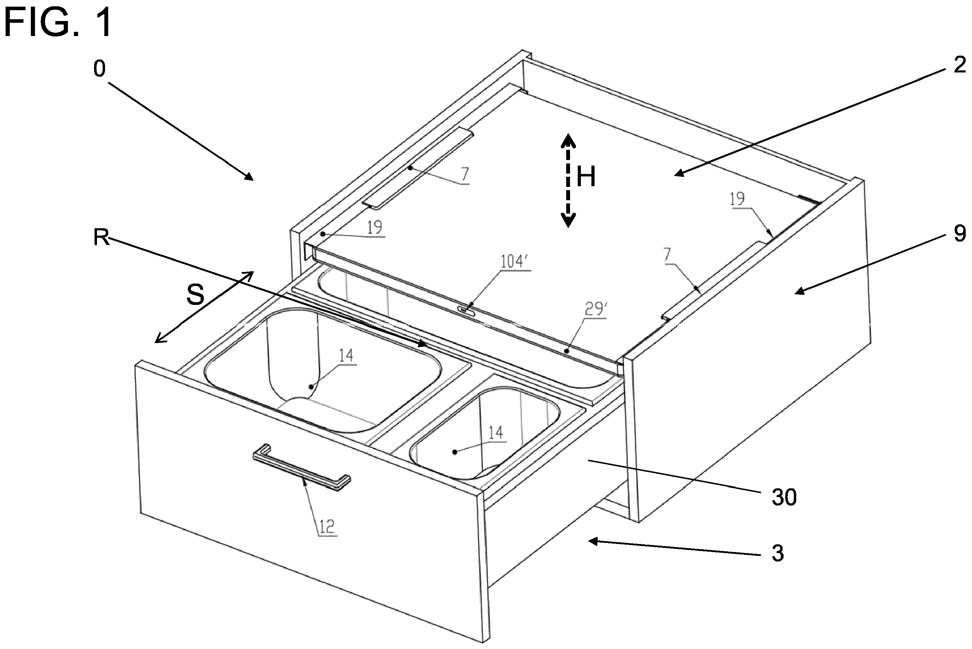

Die Vakuumschubladeneinrichtung 0 wird hier insgesamt mit 0 bezeichnet und umfasst eine Schublade 3, mit einem Schubladeninnenraum R und einen mittels Hubmitteln 7 in einer Hubrichtung H relativ bewegbaren Deckel 2. Die Schublade 3 umfasst Wände 30 und den Schubladeninnenraum R und ist in der Schubbewegungsrichtung S auf und zu bewegbar gelagert und evakuierbar ausgestaltet. Die Schublade 3 ist mit dem Deckel 2 wirkverbindbar und innerhalb eines Schubladenkorpus 9 linear in einer Schubbewegungsrichtung S bewegbar gelagert. Der Schubladenkorpus 9 bildet die äussere Hülle, in welcher der Deckel 2 und die Schublade 3 bewegbar geschützt gelagert sind. Die Schublade 3 ist in einem nicht näher erläuterten Schubladenauszug linear bewegbar gelagert, sodass die Schublade 3 in eine Offenstellung und eine Schliessstellung bringbar ist, wobei in Figur 1 die Offenstellung der Schublade 3 gezeigt ist.

Der evakuierbare Schubladeninnenraum R ist von einer Mehrzahl von Behältern 14 gebildet, wobei die Behälter 14 innerhalb der Schublade 3 positioniert angeordnet sind und jeweils die gleiche Höhe aufweisen, jedoch verschiedene Grössen. Mit dem Schubladeninnenraum R können die Innenräume der Behälter 14 ebenfalls evakuiert werden. Bevorzugt sind die Behälter 14 als Gastronormbehälter ausgebildet, deren Innenräume den gesamten Schubladeninnenraum R bilden können, welcher mittels Deckel 2 verschliessbar und evakuierbar ist. Die Behälter 14 sind in der Schublade 3 gelagert und sind mit der Schublade 3 mitbewegbar, können aber auch entnommen werden. Die Behälter 14 können aber auch andere Formen und Grössen aufweisen.

Zur Evakuierung des Schubladeninnenraums R dient der bewegbar innerhalb des Schubladenkorpus 9 angeordnete Deckel 2, welcher luftdicht ausgestaltet ist und in einer Hubrichtung H senkrecht zur Schubbewegungsrichtung S auf die Schublade 3 absenkbar gelagert ist. Der Deckel 2 ist hier mit Montagewinkeln 19 am Schubladenkorpus 9 befestigt, sodass eine Relativbewegung des Deckels 2 zur Schublade 3 ermöglicht ist.

Am und/oder teilweise im Deckel 2, innerhalb des Schubladenkorpus 9 sind Hubmittel 7 angeordnet, welche den Deckel 2 innerhalb des Schubladenkorpus 9 in Hubrichtung H bewegbar halten. Die Ausgestaltung der Hubmittel 7 kann auf unterschiedliche Arten ausgeführt sein, auf welche hier nicht weiter eingegangen wird.

Mit einer, der Schublade 3 zugewandten Deckelseite kann der Deckel 2 auf Ränder der Schublade 3 oder der Behälter 14 aufgesetzt werden, wodurch der mindestens eine Schubladeninnenraum R verschliessbar ist. Der Deckel 2 ist relativ zum Schubladenkorpus 9 und zur Schublade 3 bewegbar gelagert. Der Deckel 2 kann auf der Schublade 3 platziert werden, sodass der Schubladeninnenraum R gedichtet verschlossen ist. Das Verschliessen findet nur bei Geschlossenstellung der Schublade 3 statt, bei Offenstellung der Schublade 3 gemäss Figur 1 gibt der Deckel 2 die Schublade 3 vollständig frei. An einem Griff 12 kann die Schublade 3 gegriffen und in Schubbewegungsrichtung S verschoben werden. Mit einem Bedientaster 104' am Deckel 2, kann die Vakuumschubladeneinrichtung 0 aktiviert und deaktiviert werden. Mindestens ein Geschlossenstellungssensor 29' kann am Deckel 2 angeordnet sein, welcher einer in Figur 1 nicht dargestellten Steuerung signalisiert, dass der Deckel 2 geschlossen ist.

Mit den Hubmitteln 7 ist der Deckel 2 von der Schublade 3 bzw. den Behältern 14 entgegengesetzt gesteuert anhebbar und auch wieder auf diese absenkbar angeordnet. Damit entsteht die Hubbewegung des Deckels 2 in Hubrichtung H senkrecht zur Schubbewegungsrichtung S der Schublade 3. Die Behälter 14 innerhalb der Schublade 3 der Vakuumschubladeneinrichtung 0 können gesamthaft gegenüber gebräuchlichen Schubladen gegen oben abgeschlossen werden, indem der Nutzer von Hand, die Schublade 3 schliesst und sich der Deckel 2 in der Geschlossenstellung der Schublade 3 auf die Behälter 14 herabsenkt und diese von oben luftdicht abschliesst.

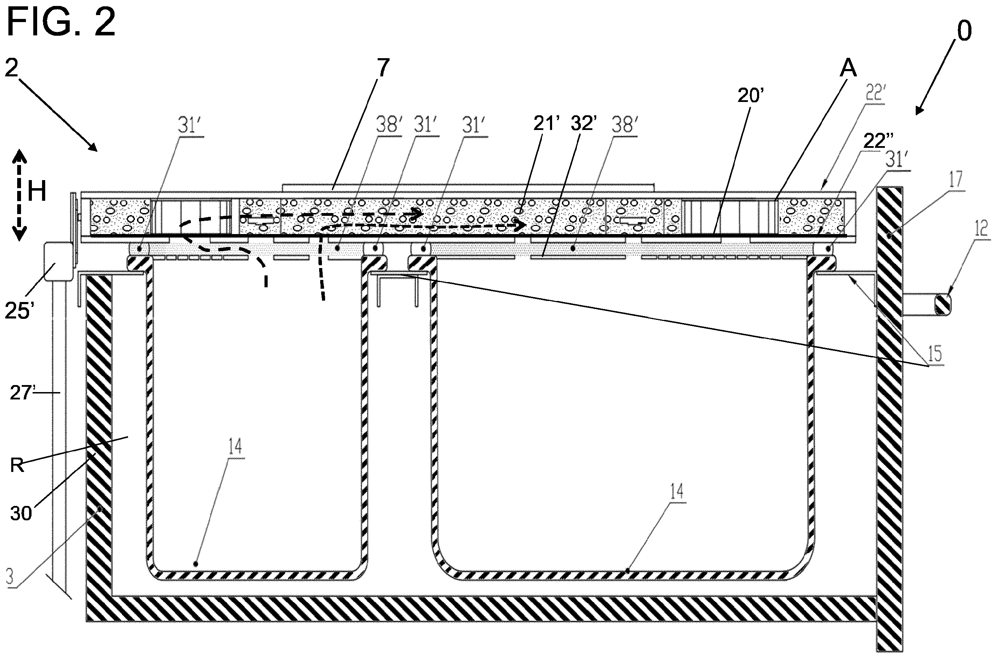

In Figur 2 dargestellt ist der luftdicht ausgestaltete Deckel 2 auf der Schublade 3 bzw. Dichtungsbeschlägen 15 aufliegend dargestellt. Der umgebende Schubladenkorpus 9 ist der Einfachheit halber weggelassen und die Schublade 3 mit einer optionalen Frontblende 17 als eine Schubladenwand 30 und einem Griff 12 im Schnitt gezeigt. Den Behälterinnenraum R bzw. die Behälter 14 luftdicht abschliessend liegt der Deckel 2 auf.

Um eine kompakte Bauweise des Deckels 2 zu erreichen, sind möglichst viele elektronischen Bauteile in den Deckel 2 integriert.

Neben Evakuiermitteln sind hier verschiedene Kanäle, Sensoren und Entfeuchtungsmittel innerhalb des Deckels 2 in mehreren Aussparungen A angeordnet. Die unterschiedlichen Wege der Luft bei der Evakuierung und bei der Entfeuchtung sind mit gestrichelten Linien angedeutet.

Ein Stromkabel 27' ist zu einem Anschlussstecker 25' verlaufend angeordnet, mittels welchem die Steuerung mit Spannung versorgt wird, die die Hubmittel, die Evakuiermittel, die Entfeuchtungsmittel und die Sensoren steuert. Die Steuerung ist hier ebenfalls in einer Aussparung A im Deckel 2 angeordnet.

Der Deckel 2 ist bevorzugt in Sandwichbauweise hergestellt, wobei verschiedene Werkstoffe in verschiedenen Lagen zu einem Deckel 2 zusammengesetzt sind. Der Deckel 2 weist zwei äussere luftdichte Decklagen 22', 22" und eine Kernlage 21' auf. Hier ist eine zusätzliche Leiterplatte 20' angeordnet, welche aber auch anstelle einer der äusseren luftdichten Decklagen 22', 22" einsetzbar ist.

Die Lagen 20', 21', 22', 22" sind miteinander statisch wirksam zu einem mehrlagigen Deckel 2 verklebt, welcher entsprechend verwindungssteif ausgeführt ist. Die obere Decklage 22' ist luftdicht ausgeführt und kann aus MDF, CFK oder Glas bestehen. Es kann aber auch eine luftundurchlässige Kunststoffbeschichtung auf einem luftdurchlässigen Material als obere Decklage 22' angeordnet sein, um die Luftdichtheit der oberen Decklage 22' zu erreichen.

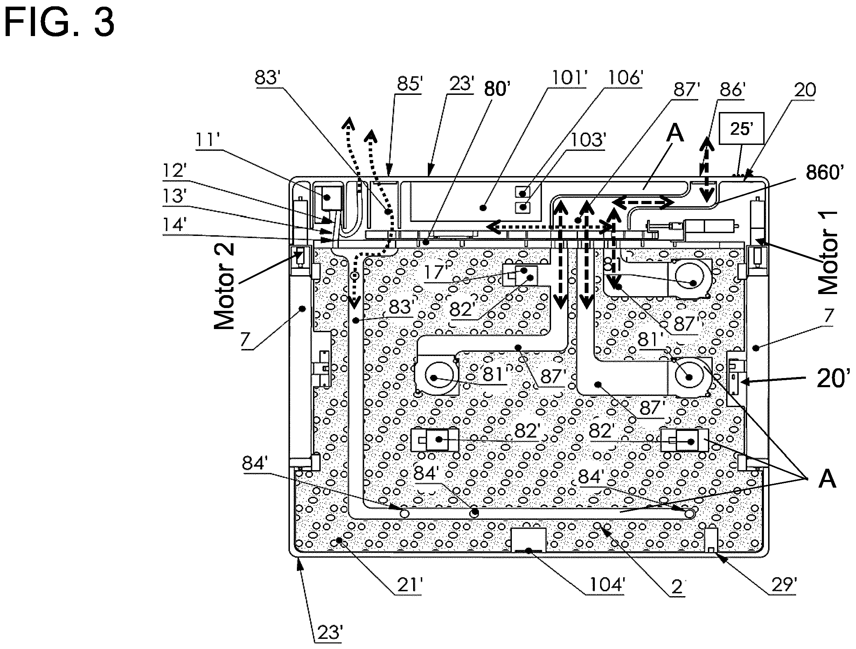

In der Kernlage 21' sind Aussparungen A vorgesehen, in welchen die elektrischen Geräte, wie Evakuiermittel und Entfeuchtungsmittel angeordnet sind. Auch Motoren oder andere Bauteile der Hubmittel können teilweise in den Aussparungen A verbaut sein, wie in Figur 3 noch besser gezeigt ist.

Um einen möglichst kompakten Deckel 2 zu erreichen, sollten möglichst alle Bauteile innerhalb des Deckels 2 gelagert sein, sodass ein solcher Deckel 2 auch einfach mit bestehenden Schubladen 3 kombinierbar ist, wodurch Vakuumschubladeneinrichtungen 0 aus einem bestehenden Schubladenkorpus 9, einer Schublade 3 und einem Deckel 2 herstellbar sind.

Die Kernlage 21' kann aus einem Kunststoffhartschaum oder aus einer wabenartigen Kunststoffstruktur oder einer Vollkunststofflage hergestellt sein, wobei die nötigen Aussparungen A angeordnet sein müssen. Kanäle und Aussparungen A können aus dem Material der Kernlage 21' ausgespart sein.

An der Leiterplatte 20' sind mindestens einseitig Leiterbahnen angeordnet, an welchen die elektrischen Verbraucher angeschlossen sind. Die Kontaktierung der elektrischen Bauteile bzw. der durch die Steuerung zu steuernden Bauteile und der Steuerung an der Leiterplatte 20' ist einfach und unkompliziert. Die Leiterplatte 20' ist Teil des sandwichartigen Deckels 2 und wird bevorzugt derart orientiert verbaut, dass die Leiterbahnen in Richtung Schubladeninnenraum R weisen. Es tritt keine störende Verkabelung innerhalb des Deckels 2 auf, welche sich ausserhalb des Deckels 2 im Schubladenkorpus 9 fortsetzt. Die Herstellung des Deckels 2 ist vereinfacht und die Fehleranfälligkeit bei der Hubbewegung des Deckels 2 ist minimiert.

Um die Stabilitätseigenschaften des Deckels 2 noch zu erhöhen, kann eine untere Decklage 22", mit gleichen Eigenschaften, wie die obere Decklage 22' als Teil des Sandwichaufbaus verwendet werden. Diese untere Decklage 22" wird schubladeninnenraumseitig an der Leiterplatte 20' befestigt. Damit die Luft durch den sandwichartigen Deckel 2 strömen kann, müssen Löcher in der Leiterplatte 20' und der optionalen Decklage 22" angeordnet sein, damit der Schubladeninnenraum R bzw. der Innenraum der Behälter 14 auspumpbar ist.

Zur Steigerung der Evakuiereigenschaften bzw. der Abdichtungseigenschaften des Deckels 2 ist eine Lage von Dichtungsprofilen 31' schubladeninnenraumseitig angeordnet, wodurch das Abdichten gegen die Ränder der Behälter 14 bzw. die Dichtungsbeschläge 15 verbessert wird. Aus hygienischen Gründen sind die Dichtungsprofile 31' lösbar befestigt und damit zu Reinigungszwecken entfernbar gestaltet.

In einer weiteren Ausführungsform mit oder ohne untere Decklage 22' und/oder Dichtungsprofile 31' kann eine Dichtungshalterung 32' und eine Lage aus Luftfilterflies 38' an der schubladenseitigen Fläche des Deckels 2 angebracht sein.

In der Aufsicht auf den Deckel 2 bei entfernter oberer Decklage 22' ist ein Deckelrahmen 23' erkennbar, in welchem die einzelnen Lagen des Sandwichaufbaus gehalten sind. Zur gesteigerten Stabilisierung ist der Deckelrahmen 23' vorteilhaft. Hier ist die Kernlage 21' erkennbar, welche Aussparungen A aufweist. Unter der Kernlage 21' wird die Leiterplatte 20' sichtbar, wobei die Lagengestaltung des Deckels 2 auch anders, beispielsweise ohne Leiterplatte 20' ausgeführt sein kann. Eine Stromanschlussvorrichtung 20 ist am oberen Deckelrahmen 23' angedeutet, welche mit dem Anschlussstecker 25' wirkverbindbar ist.

Die Hubmittel 7, umfassen hier zwei Motoren und eine Mechanik, die im Randbereich des Deckels 2 bzw. der Kernlage 21' angeordnet sind. Auch die Hubmittel 7 sind mit der Steuerung verbunden, können aber beispielsweise auch nur einen Motor und eine andere Mechanik aufweisen. Die Steuerung ist hier als Steuerplatine 101' gestaltet, welche ebenfalls im Deckel 2 sitzt.

Als Evakuiermittel sind hier eine Pumpe 11', ein Luftschlauch 12' zur Pumpe 11' und ein Anschluss 14' angeordnet. Zusätzlich ist ein Rückschlagventil 13' vorteilhaft, damit das evakuierte Volumen nicht ungewünscht belüftet wird. Diese Bauteile 11', 12', 13', 14' werden von der Steuerplatine 101' gesteuert als Evakuiermittel aufgefasst und sind hier auf der, der späteren Frontblende 17 bzw. dem Bedientaster 104' entgegengesetzten Seite der Kernlage 21' angeordnet.

Die Evakuierung des Schubladeninnenraums R bzw. der Behälter 14 kann mittels Pumpe 11' über Evakuierkanäle 83' und Löcher 84' im Deckel 2 führend, erfolgen. Durch ein steuerbares Ventil 80' kann automatisiert durch die Steuerung eine Evakuierung der Schubladeninnenräume R bzw. der Behälter 14 durchgeführt werden, indem der mindestens eine Evakuierkanal 83' mittels Ventil 80' gesteuert geöffnet oder verschlossen wird. Sobald das Ventil 80' geöffnet ist, kann die Luft mittels Pumpe 11' ausgepumpt werden. Auch die Evakuierkanäle 83', die Löcher 84' und das steuerbare Ventil 80' sind Teil der Evakuiermittel.

Für die Evakuierung sollte der Luftdruck bzw. der Stand des Unterdruckes im Schubladeninnenraum R oder den Behältern 14 der Steuerung signalisiert sein. Dazu ist mindestens ein Drucksensor 17' in einem Evakuierkanal 83' bzw. einer mittels Ventil 80' verschliessbaren Aussparung A angeordnet. So kann die Steuerung auf einen Schwellwert des Unterdruckes programmiert sein und sollte der Drucksensor 17' eine Unterschreitung melden, kann die Steuerung das Ventil 80' und die Pumpe 11' entsprechend aktivieren. Luft wird, wie mit dem gepunkteten Pfeil markiert, aus dem Evakuierkanal 83', bei Ventil 80' in Evakuierstellung herausgepumpt.

Im hinteren Bereich des Deckels 2, der Frontblende 17 entgegengesetzt sind eine Luftauslassöffnung 85', die Steuerplatine 101', ein Beschleunigungssensor 103' und ein Bluetoothmodul 106', also eine Funkübertragungseinheit nach dem bluetooth-Standard angeordnet. Dabei wären noch andere Funksendungsprotokolle denkbar, um die Steuerung bzw. die Steuerplatine 101' der Vakuumschubladeneinrichtung 0 zu programmieren bzw. zu manipulieren. Durch die Luftauslassöffnung 85' wird die mittels Pumpe 11' herausgepumte Luft aus dem Deckel 2 entfernt. Bevorzugt weist die Luftauslassöffnung 85' einen Luftfilter auf, welcher austauschbar ist. Die Steuerplatine 101' stellt hier die Steuerung der Hubmittel, Evakuiermittel und Entfeuchtungsmittel dar.

Um den Schubladeninnenraum R und/oder die Behälter 14 zu entfeuchten, weist der Deckel 2 hier Entfeuchtungsmittel auf. Diese sind im Deckel 2, bevorzugt in Aussparungen A in der Kernlage 21' angeordnet und mit der Steuerung mindestens teilweise elektrisch verbunden.

Durch mindestens eine Lufteinlassöffnung 86', bevorzugt mit einem Luftfilter kann Frischluft von ausserhalb des Deckels 2 bei geöffnetem Ventil 80' von optionalen Lufteinlasskanalwänden 860' begrenzt durch Entfeuchtungskanäle 87' bis in den Schubladeninnenraum R bzw. Behälter 14 durch mindestens eine Abluftöffnung 33' im Deckel 2 einströmen. Luft kann aus dem Schubladeninnenraum R bzw. Behälter 14 durch die Abluftöffnung 33', den mindestens einen Entfeuchtungskanal 87' mittels Ventilator 81' schlussendlich durch die Luftauslassöffnung 85' und/oder die Lufteinlassöffnung 86' ausgebracht werden.

Die Betätigung des Ventils 80' erfolgt auch hier automatisiert durch die Steuerung. Der mindestens eine Entfeuchtungskanal 87' kommuniziert mit dem Schubladeninnenraum R bzw. dem Behälterinnenraum, sodass bei Anordnung von mindestens einem Feuchtigkeitssensor 82', die aktuelle Luftfeuchtigkeit gemessen und an die Steuerung übermittelt werden kann. Der mindestens eine Feuchtigkeitssensor 82' ist dabei im Entfeuchtungskanal 87' oder in einer mit dem Schubladeninnenraum R bzw. einem der Behälter 14 kommunizierenden Aussparung angeordnet. Bevorzugt sind Seitenwände 860' entlang der Entfeuchtungskanäle 87' und der Öffnungen 85', 86' angeordnet.

Der Entfeuchtungsvorgang läuft mittels mindestens einem Ventilator 81' ab, welcher im Verlauf des mindestens einen Entfeuchtungskanals 87' in einer Aussparung A angeordnet ist. Der Ventilator 81' sorgt für ein Ansaugen und Verteilen von Frischluft im Schubladeninnenraum R und den Behältern 14 bei geschlossenem Deckel 2, womit Wasser/Wasserdampf von den gelagerten Lebensmitteln wegtransportierbar ist.

### Überwachungsverfahren und Entfeuchtung

Zur Überwachung des Schubladeninnenraums R bei geschlossenem Deckel 2 sind die folgenden Schritte nötig. Die Steuerung/Steuerplatine 101' ist derart programmiert, dass die relative Luftfeuchtigkeit mit dem mindestens einen Feuchtigkeitssensor 82', welcher mit dem Schubladeninnenraum R bzw. dem Behälterinnenraum über den Entfeuchtungskanal 87' kommuniziert, dauerhaft in zeitlichen Abständen gemessen wird.

Übersteigt die relative Luftfeuchtigkeit rF im Entfeuchtungskanal 87', im Schubladeninnenraum R bzw. dem Behälterinnenraum 80% als oberen Schwellwert, so öffnet die Steuerung das Ventil 80', sodass Frischluft durch die Lufteinlassöffnung 86' mittels mindestens einem Ventilator 81' im Inneren zur Spülung verteilt wird. Bei der Umwälzung der Frischluft durch den Ventilator 81' nimmt die zugeführte Luft Feuchtigkeit von den Lebensmitteloberflächen auf, sodass Feuchtigkeit abgeführt wird.

Der mindestens eine Feuchtigkeitssensor 82' misst weiter in zeitlichen Abständen und signalisiert der Steuerung bei Erreichen einer relativen Luftfeuchtigkeit rF kleinergleich 60%, als unterer Schwellwert,
das mindestens eine Ventil 80' zu schliessen und den mindestens einen Ventilator 81' zu stoppen, sodass die Steuerung anschliessend wieder in den Überwachungsmodus schaltet.

Um die Lebensmittel weiter dauerhaft zu schützen, sollte auch die Evakuierung gestartet werden. Entsprechend werden anschliessend die Evakuiermittel gestartet, falls nötig, das Ventil 80' in Evakuierstellung gebracht und der Schubladeninnenraum R bzw. die Behälter auf einen gewünschten Unterdruck gebracht. Sobald dieser gewünschte Unterdruck erreicht ist, wird das Ventil 80' geschlossen und die Pumpe 11' ausgeschaltet. Anschliessend geht die Steuerung wieder in einen Überwachungsmodus über, wobei die Feuchtigkeit mittels des mindestens einen Feuchtigkeitssensors 82' und optional auch der Unterdruck mit dem mindestens einen Drucksensor 17' überwacht wird.

Man könnte den Entfeuchtungsvorgang auch zeitgesteuert automatisch Starten, ohne die relative Feuchtigkeit vorgängig zu messen. Dann steigt aber entsprechend der Energieverbrauch an, da eventuell unnötigerweise Entfeuchtet wird.

Auch bei Unterschreitung eines Mindestunterdrucks, gemessen durch den mindestens einen Drucksensor 17', schaltet die Steuerung automatisiert ein und evakuiert den Schubladeninnenraum R bzw. den Behälter 14 nochmalig.

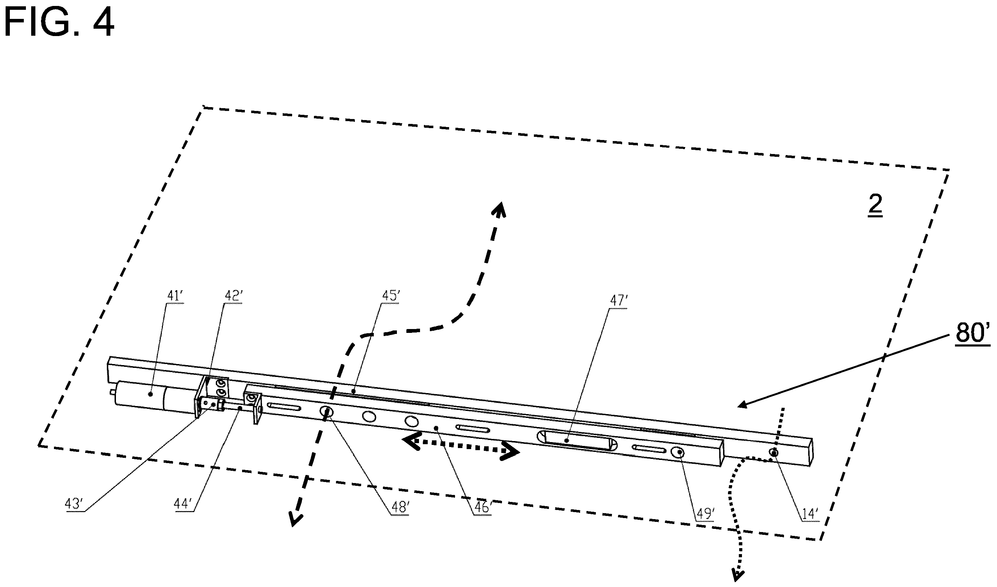

In Figur 4 ist eine bevorzugte Möglichkeit gezeigt, wie das Ventil 80' ausgestaltet sein kann. Hier ist ein linear betriebenes Ventil 80' vorgesehen, welches von einem Getriebemotor 41' angetrieben wird. An einem Basisprofil 45' ist der Getriebemotor 41' über eine Motorhalterung 42' befestigt. Über eine Wellenkupplung 43' ist eine Spindel 44' betätigbar, die mit einem variablen Profil 46' wirkverbunden ist. Somit kann das variable Profil 46' relativ zum Basisprofil 45', wie mit dem Doppelpfeil angedeutet linear verfahren werden.

Im Basisprofil 45' sind Öffnungen vorgesehen, welche mit dem variablen Profil 46' abgedichtet werden können bzw. freigegeben werden können. Das variable Profil 46' ist relativ zum Basisprofil 45' linear, am Basisprofil 45' entlang verschiebbar. Im variablen Profil 46' sind mindestens eine Luftauslassöffnung 48' und mindestens eine Lufteinlassöffnung 49' ausgespart. Je nach Relativstellung des variablen Profils 46' zum Basisprofil 45' kann Luft hindurchströmen und im späteren Betrieb in den Entfeuchtungskanal 87' und/oder den Evakuierkanal 83' eingelassen werden.

Damit die Steuerung den Zustand des Ventils 80' bzw. die Stellung des variablen Profils 46' auslesen kann, ist hier ein Schiebepotentiometer 47' angeordnet, dessen jeweiliger elektrischer Widerstand Rückschlüsse auf die Position des variablen Profils 46' erlaubt.

Optional ist hier auch eine Öffnung 14' zum Anschluss zwischen Pumpe 11' an den Evakuierkanal 83' im Basisprofil 45' angeordnet. Die Evakuierung kann aber auch mit einem weiteren Ventil gesteuert durchgeführt werden.

Das Linearventil 80' ist durch die Steuerung gezielt öffenbar und schliessbar, sodass die Durchführung des Entfeuchtungsverfahrens problemlos ist. Auch ist das Linearventil 80' äusserst kompakt innerhalb des Deckels 2 angeordnet. Das Linearventil 80' kann einen Teil des mehrlagigen Deckels 2 bilden.

Auf der Unterseite des Deckels 2 bzw. der Decklage 22' zum Schubladeninnenraum R weisend, sind Dichtungsprofile 31', Dichtungshalterungen 32' und eine Lage aus Luftfilterflies 38' eingebracht. Die Dichtungsprofile 31' umschliessen einzelne Abschnitte in welchen die Lage der Dichtungshalterungen 32' erkennbar ist, welche das Luftfilterflies 38' abdecken, wobei die Behälter 14 später unter diesen Abschnitten zu liegen kommen. In jedem dieser Bereiche ist die Abluftöffnung 33' auf Höhe des nicht dargestellten Ventilators 81' angeordnet. Die Öffnung 35' für den Feuchtigkeitssensor 82' ist ebenfalls in jedem Bereich angeordnet. Genauso wie jeweils die Zuluftöffnung 34' durch welche jedes Dichtungsprofil 31' bzw. der Schubladeninnenraum R über die Steuerung belüftet werden kann.

Die Dichtmittel, bestehend aus Dichtungsprofilen 31', der Dichtungshalterung 32' und der Lage aus Luftfilterflies 38' sind auswechselbar am Deckel 2 anordbar gestaltet. Die Dichtmittel können vollständig vom Deckel 2 entfernt werden, beispielsweise zu Reinigungszwecken.

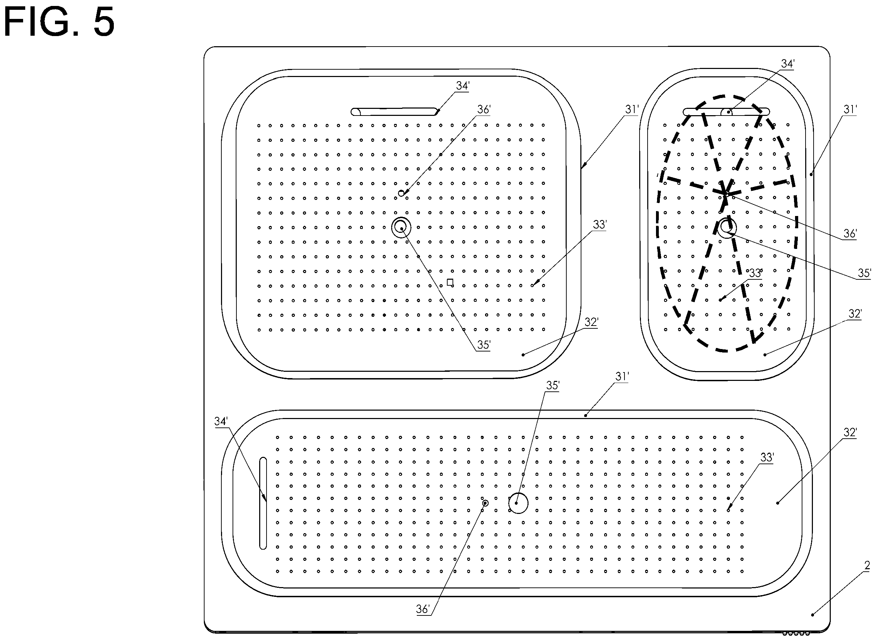

Um die Haltbarkeit der offen gelagerten Lebensmittel in den Behältern 14 bzw. dem Schubladeninnenraum R noch zur erhöhen, sollte der Schubladeninnenraum R mit blauem Licht im Wellenlängenbereich von 450nm bis 470nm, bevorzugt mit 460nm beleuchtet werden. Dazu ist in den Schubladeninnenraum R bzw. den Behälter strahlend, mindestens eine entsprechende Lichtquelle 36' an der Unterseite des Deckels 2 mit der Steuerung verbunden angeordnet. Die Lichtquelle 36' sendet hier ihr Licht durch eine Öffnung im Dichtmittel mit einem maximal möglichen Lichtkegel möglichst flächenhaft aus. Ein Beispiel eines Lichtkegels ist in Figur 5 gestrichelt angedeutet. Der Unterdruck kann durch Abluftöffnungen 33' und die Entfeuchtung durch Zuluftöffnungen 34' erreicht werden.

Vorteilhaft ist die kompakte Anordnung sämtlicher Bauteile im Deckel 2 bzw. in Aussparungen in mindestens einer Deckellage, insbesondere in der Kernlage 21'. Die Bauteile ragen bevorzugt mindestens teilweise in die Aussparungen A hinein oder aus diesen heraus. Der gesamte Deckel 2 in Sandwichbauweise oder nicht, muss derart luftdicht sein, dass der Deckel 2 den Schubladeninnenraum R ausreichend gegen die Aussenluft abdichten kann. Das die Steuerung ausreichend mit Strom versorgt werden muss, um sämtliche Funktionen zu erfüllen, ergibt sich für den Fachmann von selbst. Auch, wenn die Steuerung in Form der Steuerplatine 101' ausgeführt ist, muss die Stromversorgung gewährleistet sein.

## Patentansprüche

1. Deckel (2) zur Auflage auf einer Schublade (3) einer Vakuumschubladeneinrichtung (0) mit Hubmitteln (7), wobei der Deckel (2) eine Abdichtung eines Schubladeninnenraums (R) zur Schublade (3) durch geeignete Mittel im Deckel (2) ermöglicht, wobei der Deckel (2) und die Hubmittel (7) mit einer Steuerung wirkverbunden sind, wobei im Deckel (2) Entfeuchtungsmittel angeordnet sind, welche mindestens ein steuerbares Ventil (80') und einen Ventilator (81'), welche mit der Steuerung wirkverbunden sind, sowie eine Luftauslassöffnung (85'), eine Lufteinlassöffnung (86') und einen Entfeuchtungskanal (87') umfassen, sodass in zeitlichen Abständen Frischluft von außerhalb des Deckels (2) und des Schubladeninnenraums (R) zuführbar, umwälzbar und durch den mindestens einen Ventilator (81') und das Ventil (80') gesteuert aus dem Schubladeninnenraum (R) wieder entnehmbar ist, wobei die Entfeuchtungsmittel mindestens einen Feuchtigkeitssensor (82') aufweisen, welcher mit der Steuerung wirkverbunden ist und die gesteuerte Messung und Überwachung der relativen Luftfeuchtigkeit im Schubladeninnenraum (R) bzw. im Entfeuchtungskanal (87') bzw. am Ort des Ventilators (81') erlaubt, wobei der Deckel (2) mit der Steuerung, elektrischen Evakuiermitteln und den Entfeuchtungsmitteln wirkverbunden ist, welche automatisiert durch die Steuerung betrieben werden, wobei neben den Evakuiermitteln verschiedene Kanäle (83', 87'), Sensoren (17', 29', 82', 103') und Entfeuchtungsmittel innerhalb des Deckels (2) in mehreren Aussparungen (A) angeordnet sind.

2. Deckel (2) nach Anspruch 1, wobei die Entfeuchtungsmittel, insbesondere das Ventil (80') in einer oder mehreren Aussparungen (A) in einer Kernlage (21') des in Sandwichbauweise ausgeführten Deckels (2) angeordnet sind.

3. Deckel (2) nach Anspruch 1 oder 2, wobei das steuerbare Ventil (80') als Linearventil, umfassend ein variables Profil (46'), welches relativ zu einem Basisprofil (45') linear bewegbar ist und notwendige Öffnungen am Basisprofil (45') und variablen Profil (46') angeordnet sind, sodass unterschiedliche Öffnungen je nach Relativstellung beider Profile zueinander offen oder geschlossen sind.

4. Deckel (2) nach Anspruch 3, wobei am Ventil (80') ein Schiebepotentiometer (47') zur Bestimmung der jeweiligen Stellung des variablen Profils (46') relativ zum Basisprofil (45') angeordnet ist, welches mit der Steuerung wirkverbunden ist.

5. Deckel (2) nach einem der Ansprüche 3 oder 4, wobei das Ventil (80') bzw. das variable Profil (46') mittels eines, über eine Motorhalterung (42') am Basisprofil (45') befestigten, Getriebemotors (41') über eine Wellenkupplung (43') und eine Spindel (44') betätigbar ist.

6. Deckel (2) nach einem der Ansprüche 1 bis 5, wobei die Steuerung als Steuerplatine (101') im Deckel (2), bevorzugt in einer oder mehreren Aussparungen (A) in einer Kernlage (21') des in Sandwichbauweise ausgeführten Deckels (2) ausgeführt angeordnet ist.

7. Deckel (2) nach einem der Ansprüche 1 bis 6, wobei mindestens eine Lichtquelle (36') mechanisch am oder im Deckel (2) angeordnet und mit der Steuerung elektrisch verbunden ist, welche durch die Steuerung gesteuert blaues Licht mit einer Wellenlänge von 460nm +/-10nm zum Schubladeninnenraum (R) bzw. in den Innenraum eines Behälters (14) in der Schublade (3) ausstrahlt.

8. Vakuumschubladeneinrichtung (0), umfassend eine in eine Schubbewegungsrichtung (S) linear bewegbare Schublade (3) mit mindestens einem Schubladeninnenraum (R), mit einer Steuerung und einem Deckel (2) nach einem der Ansprüche 1 bis 7.

## Claims

1. A lid (2) for resting on a drawer (3) of a vacuum drawer device (0) having lifting means (7), the lid (2) being configured to seal a drawer interior (R) to the drawer (3) by suitable means in the lid (2), wherein the lid (2) and the lifting means (7) are operatively connected to a controller, wherein in the lid (2), there are arranged dehumidifying means comprising at least one controllable valve (80') and a ventilator (81') which are operatively connected to the controller, as well as an air outlet opening (85'), an air inlet opening (86') and a dehumidifying channel (87') such that in timed intervals, fresh air from outside the lid (2) and the drawer interior (R) can be supplied, circulated and can be again removed from the drawer interior (R) by the at least one ventilator (81') and the valve (80') in a controlled manner, wherein the dehumidifying means include at least one humidity sensor (82') operatively connected to the controller and allowing a controlled measurement and monitoring of the humidity in the drawer interior (R) or, respectively, in the dehumidifying channel (87') or, respectively at the place of the ventilator (81'), wherein the lid (2) is operatively connected to the controller, to the electrical evacuating means and to the dehumidifying means which are automatically operated by the controller, wherein besides the evacuating means, various channels (83', 87'), sensors (17', 29', 82', 103') and dehumidifying means are arranged within the lid (2) in a plurality of recesses (A).

2. The lid (2) according to claim 1, wherein the dehumidifying means, in particular the valve (80'), are arranged in one or more recesses (A) in a core layer (21') of the lid (2) having a sandwich structure.

3. The lid (2) according to claim 1 or 2, wherein the controllable valve (80') is configured as a linear valve having a variable profile (46') linearly movable relative to a base profile (45'), and required openings at the base profile (45) and at the variable profile (46') are arranged such that differing openings are opened or closed depending on the relative position of the two profiles (45', 46') to each other.

4. The lid (2) according to claim 3, wherein a slide potentiometer (47') is arranged so as to determine the respective position of the variable profile (46') relative to the base profile (45') that is operatively connected to the controller.

5. The lid (2) according to one of the claims 3 or 4, wherein the valve (80') or, respectively, the variable profile (46') is configured to be actuated by a gear motor (41'), which is fixed by a motor mount (42') to the base profile (45'), via a shaft clutch (43') and a spindle (44').

6. The lid (2) according to one of the claims 1 to 5, wherein the controller is arranged as a control board (101') in the lid (2), preferably in one or more recesses (A) in a core layer (21') of the lid (2) having a sandwich structure.

7. The lid (2) according to one of the claims 1 to 6, wherein at last one light source (36') is mechanically arranged at or in the lid (2) and electrically connected to the controller, which radiates blue light controlled by the controller to the drawer interior (R) or, respectively, into the interior of a container (14) in the drawer (3), said blue light having a wavelength of 460nm (+/- 10nm).

8. A vacuum drawer device (0) comprising a drawer (3) linearly movable in a sliding movement direction (S) and having at least one drawer interior (R), with a controller and a lid (2) according to one of the claims 1 to 7.

## Revendications

1. Couvercle (2) destiné à être placé sur un tiroir (3) d'un dispositif de tiroir à vide (0) avec des moyens de levage (7), dans lequel le couvercle (2) permet une étanchéité d'un espace intérieur de tiroir (R) par rapport au tiroir (3) par des moyens appropriés dans le couvercle (2), dans lequel le couvercle (2) et les moyens de levage (7) sont reliés en liaison fonctionnelle à une commande, dans lequel des moyens de déshumidification sont disposés dans le couvercle (2), lesquels comprennent au moins une vanne (80') pouvant être commandée et un ventilateur (81'), qui sont reliés en liaison fonctionnelle à la commande, ainsi qu'une ouverture de sortie d'air (85'), une ouverture d'entrée d'air (86') et un conduit de déshumidification (87') si bien que de l'air frais provenant de l'extérieur du couvercle (2) et de l'espace intérieur de tiroir (R) peut être amené, peut être recyclé et peut être de nouveau prélevé hors de l'espace intérieur de tiroir (R) de manière commandée par l'au moins un ventilateur (81') et la vanne (80') à des intervalles donnés, dans lequel les moyens de déshumidification présentent au moins un capteur d'humidité (82'), qui est relié en liaison fonctionnelle à la commande et qui permet de mesurer et de surveiller l'humidité relative de l'air dans l'espace intérieur de tiroir (R) ou dans le canal de déshumidification (87') ou à l'emplacement du ventilateur (81'), dans lequel le couvercle (2) est relié en liaison fonctionnelle à la commande, à des moyens de mise sous vide électriques et aux moyens de déshumidification, qui sont actionnés automatiquement par la commande, dans lequel, outre les moyens de mise sous vide, différents canaux (83', 87'), capteurs (17', 29', 82', 103') et moyens de déshumidification sont disposés à l'intérieur du couvercle (2) dans plusieurs évidements (A).

2. Couvercle (2) selon la revendication 1, dans lequel les moyens de déshumidification, en particulier la vanne (80'), sont disposés dans un ou plusieurs évidements (A) dans une position centrale (21') du couvercle (2) présentant une conception en sandwich.

3. Couvercle (2) selon la revendication 1 ou 2, dans lequel la vanne (80') pouvant être commandée est une vanne linéaire, comprenant un profil variable (46'), qui est mobile linéairement par rapport à un profil de base (45') et des ouvertures nécessaires sont disposées sur le profil de base (45') et le profil variable (46'), si bien que différentes ouvertures sont ouvertes ou fermées les unes par rapport aux autres en fonction de la position relative des deux profils.

4. Couvercle (2) selon la revendication 3, dans lequel un potentiomètre coulissant (47') est disposé sur la vanne (80') pour définir la position respective du profil variable (46') par rapport au profil de base (45'), lequel est relié en liaison fonctionnelle à la commande.

5. Couvercle (2) selon l'une quelconque des revendications 3 ou 4, dans lequel la vanne (80') ou le profil variable (46') est actionnable par l'intermédiaire d'un accouplement d'arbre (43') et d'une broche (44') au moyen d'un motoréducteur (41') fixé sur le profil de base (45') par l'intermédiaire d'une fixation de moteur (42').

6. Couvercle (2) selon l'une quelconque des revendications 1 à 5, dans lequel la commande est disposée en tant que platine de commande (101') dans le couvercle (2), de manière préférée dans un ou plusieurs évidements (A) dans une position centrale (21') du couvercle (2) présentant une conception en sandwich.

7. Couvercle (2) selon l'une quelconque des revendications 1 à 6, dans lequel au moins une source lumineuse (36') est disposée mécaniquement sur ou dans le couvercle (2) et est reliée électriquement à la commande, laquelle émet, commandée par la commande, une lumière bleue d'une longueur d'onde de 460 nm +/-10 nm vers l'espace intérieur de tiroir (R) ou dans l'espace intérieur d'un récipient (14) dans le tiroir (3).

8. Dispositif de tiroir à vide (0), comprenant un tiroir (3) mobile linéairement dans une direction de déplacement de poussée (S) avec au moins un espace intérieur de tiroir (R), avec une commande et un couvercle (2) selon l'une quelconque des revendications des revendications 1 à 7.
